(19) Europäisches Patentamt
European Patent Office
Office européen des brevets

(11) **EP 3 142 282 A1**

(12) **EUROPEAN PATENT APPLICATION**
published in accordance with Art. 153(4) EPC

(43) Date of publication:
**15.03.2017 Bulletin 2017/11**

(51) Int Cl.:
***H04L 1/18*** *(2006.01)*

(21) Application number: **14893219.7**

(86) International application number:
**PCT/CN2014/078518**

(22) Date of filing: **27.05.2014**

(87) International publication number:
**WO 2015/180036 (03.12.2015 Gazette 2015/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventors:
• **WANG, Lei
Shenzhen
Guangdong 518129 (CN)**

• **CHEN, Dageng
Shenzhen
Guangdong 518129 (CN)**
• **WU, Ye
Shenzhen
Guangdong 518129 (CN)**

(74) Representative: **Pfenning, Meinig & Partner mbB
Patent- und Rechtsanwälte
Theresienhöhe 11a
80339 München (DE)**

(54) **CYCLIC MAPPING METHOD AND DEVICE**

(57) A circular mapping method and device are provided, and the method includes: classifying bit positions in a circular buffer according to a modulation parameter; and mapping, according to obtained classification information of the bit positions, system bits and parity bits that are obtained after channel encoding to the bit positions in the circular buffer in sequence. Bit positions in a circular buffer are classified according to different modulation schemes, and system bits and parity bits are mapped to the bit positions in the circular buffer in sequence according to obtained classification information of the bit positions, which avoids that all the system bits are placed in a front-most part of the circular buffer, and improves a probability that the system bits are allocated to bit positions of high reliability, thereby reducing a bit error rate of a system and improving reliability of the system.

~ **101**

Classify bit positions in a circular buffer according to a modulation parameter

~ **102**

Map, according to obtained classification information of the bit positions, system bits and parity bits that are obtained after channel encoding to the bit positions in the circular buffer respectively in sequence

FIG. 1

EP 3 142 282 A1

**Description**

**TECHNICAL FIELD**

The present invention relates to the field of communications technologies, and in particular, to a circular mapping method and device.

**BACKGROUND**

High order modulation based on Gray (Gray) mapping, that is, high order Gray mapping, is used in a Long Term Evolution (LTE, Long Term Evolution) system. Gray mapping is constellation mapping in which an encoding rule of Gray code is used. For the Gray mapping, different bits have different transmission performance. For example, in 64-quadrature amplitude modulation (QAM, Quadrature Amplitude Modulation), b0 bits have the highest transmission reliability, b1 bits have the second highest transmission reliability, and b2 bits have the lowest transmission reliability.

Currently, in the LTE system, bits obtained after channel encoding first need to be placed into a circular buffer for a rate matching operation, and then undergo high order Gray mapping.

After being encoded, the bits for channel encoding form three bit streams. The three obtained bit streams are one stream of system bits and two streams of parity bits respectively.

A manner for placing the bits obtained after channel encoding in the circular buffer for a rate matching operation includes:

placing the one stream of system bits in a front-most part of the circular buffer, and placing the two streams of parity bits alternatively behind the system bits.

It is found in research that currently, bits obtained after channel encoding are placed in an independent manner, and consequently, a bit error rate of a system rises along with an increase of a modulation order when a high order Gray mapping operation is performed.

**SUMMARY**

In view of this, embodiments of the present invention provide a circular mapping method and device, which are used to resolve a current problem that, when a high order Gray mapping operation is performed, a bit error rate of a system rises along with an increase of a modulation order because bits after channel encoding are placed in an independent manner.

According to a first aspect of the present invention, a circular mapping method is provided, including:

classifying bit positions in a circular buffer according to a modulation parameter; and

mapping, according to obtained classification information of the bit positions, system bits and parity bits that are obtained after channel encoding to the bit positions in the circular buffer respectively in sequence.

With reference to the possible implementation manner of the first aspect of the present invention, in a first possible implementation manner, the modulation parameter includes a modulation order; and the classifying bit positions in a circular buffer according to a modulation parameter includes:

determining, according to the modulation order, a quantity of categories into which the bit positions in the circular buffer are classified and a category identifier corresponding to each category; and determining and obtaining, by using a number of a bit position in the circular buffer, a category identifier corresponding to each bit position.

With reference to the first possible implementation manner of the first aspect of the present invention, in a second possible implementation manner, the determining and obtaining, by using a number of a bit position in the circular buffer, a category identifier corresponding to each bit position includes:

calculating a modulus value of the number of the bit position in the circular buffer and the quantity of classified categories, and determining, according to the modulus value, the category identifier corresponding to each bit position.

With reference to the second possible implementation manner of the first aspect of the present invention, in a third possible implementation manner, the modulus value of the number of the bit position in the circular buffer and the quantity of categories is calculated in the following manner:

$$\mathrm{mod}(i, \log 2(M)/2),$$

where $i$ represents the number of the bit position with a value ranging from 0 to N-1, where N is a length of the bit positions in the circular buffer; $M$ is the modulation order; and log2($M$)/2 is the quantity of categories into which the bit positions in the circular buffer are classified; and the determining, according to the modulus value, the category identifier corresponding to each bit position includes:

if the modulus value that is obtained through calculation is 0, determining that a category identifier corresponding to a bit position whose number is $i$ is a first category; if the modulus value that is obtained through calculation is 1, determining that the category identifier corresponding to the bit position whose number is $i$ is a second category; and if the modulus value that is obtained through calculation is a difference between $\log2(M)/2$ and 1, determining that the category identifier corresponding to the bit position whose number is $i$ is a $[\log2(M)/2]^{th}$ category.

With reference to the second possible implementation manner of the first aspect of the present invention or with reference to the third possible implementation manner of the first aspect of the present invention, in a fourth possible implementation manner, the classification information includes category identifiers corresponding to the bit positions; and
the mapping, according to obtained classification information of the bit positions, system bits and parity bits that are obtained after channel encoding to the bit positions in the circular buffer respectively in sequence includes:

   selecting, according to the category identifiers corresponding to the bit positions included in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the selected bit positions corresponding to the category identifier is less than the quantity of the system bits, further selecting, from the circular buffer, bit positions corresponding to another category identifier, and mapping the remaining system bits to the further selected bit positions corresponding to the another category identifier, until mapping of the system bits is complete; and
   mapping the parity bits that are obtained after channel encoding to bit positions, corresponding to the another category identifier, remaining in the circular buffer.

With reference to the first possible implementation manner of the first aspect of the present invention, in a fifth possible implementation manner, the determining and obtaining, by using a number of a bit position in the circular buffer, a category identifier corresponding to each bit position includes:

   determining a bit position range, in the circular buffer, corresponding to data of the $P^{th}$ redundancy version, where the bit position range includes a start bit position and an end bit position, and P is a natural number; and
   calculating a difference between the number of the bit position in the circular buffer and a number of the start bit position and calculating a modulus value of the difference and the quantity of classified categories, and determining, according to the modulus value, a category identifier corresponding to each bit position in the bit position range.

With reference to the fifth possible implementation manner of the first aspect of the present invention, in a sixth possible implementation manner, the difference between the number of the bit position in the circular buffer and the number of the start bit position, and the modulus value of the difference and the quantity of categories are calculated in the following manner:

$$\mathrm{mod}(i - S, \log2(M)/2),$$

where $i$ represents the number of the bit position with a value ranging from 0 to N-1, where N is a length of the bit positions in the circular buffer; $S$ is the number of the start bit position of the determined bit position range, in the circular buffer, corresponding to the data of the $P^{th}$ redundancy version; $M$ is the modulation order; and $\log2(M)/2$ is the quantity of categories into which the bit positions in the circular buffer are classified; and
the determining, according to the modulus value, a category identifier corresponding to each bit position in the bit position range includes:

   if the modulus value that is obtained through calculation is 0, determining that a category identifier corresponding to a bit position whose number is $i$ in the bit position range is a first category; if the modulus value that is obtained through calculation is 1, determining that the category identifier corresponding to the bit position whose number is $i$ in the bit position range is a second category; and if the modulus value that is obtained through calculation is a difference between $\log2(M)/2$ and 1, determining that the category identifier corresponding to the bit position whose number is $i$ in the bit position range is a $[\log2(M)/2]^{th}$ category.

With reference to the fifth possible implementation manner of the first aspect of the present invention or with reference to the sixth possible implementation manner of the first aspect of the present invention, in a seventh possible implementation manner, the classification information includes category identifiers corresponding to the bit positions; and
the mapping, according to obtained classification information of the bit positions, system bits and parity bits that are obtained after channel encoding to the bit positions in the circular buffer respectively in sequence includes:

   selecting, from the bit position range according to the category identifiers corresponding to the bit positions included in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further selecting, from the bit position range, bit positions corresponding to another category identifier, and mapping the remaining system bits to the further selected bit positions corresponding to the another category identifier, until mapping of the system bits is complete;

determining whether there is a bit position remaining in the bit position range; and

if yes, mapping the parity bits that are obtained after channel encoding, preferentially to the bit position remaining in the bit position range, and when a quantity of bit positions remaining in the bit position range is less than a quantity of the parity bits, mapping the remaining parity bits to other bit positions in the circular buffer outside the bit position range; or

if not, mapping the parity bits that are obtained after channel encoding to other bit positions in the circular buffer outside the bit position range.

According to a second aspect of the present invention, a circular mapping device is provided, including:

a classification module, configured to classify bit positions in a circular buffer according to a modulation parameter; and

a mapping module, configured to map, according to classification information of the bit positions that is obtained by the classification module, system bits and parity bits that are obtained after channel encoding to the bit positions in the circular buffer respectively in sequence.

With reference to the possible implementation manner of the second aspect of the present invention, in a first possible implementation manner, the modulation parameter includes a modulation order; and

the classification module is specifically configured to: determine, according to the modulation order, a quantity of categories into which the bit positions in the circular buffer are classified and a category identifier corresponding to each category; and determine and obtain, by using a number of a bit position in the circular buffer, a category identifier corresponding to each bit position.

With reference to the first possible implementation manner of the second aspect of the present invention, in a second possible implementation manner, the classification module is specifically configured to: calculate a modulus value of the number of the bit position in the circular buffer and the quantity of classified categories, and determine, according to the modulus value, the category identifier corresponding to each bit position.

With reference to the second possible implementation manner of the second aspect of the present invention, in a third possible implementation manner, the classification module is specifically configured to: calculate the modulus value of the number of the bit position in the circular buffer and the quantity of categories in the following manner:

$$\mod(i, \log 2(M)/2),$$

where $i$ represents the number of the bit position with a value ranging from 0 to N-1, where N is a length of the bit positions in the circular buffer; $M$ is the modulation order; and $\log2(M)/2$ is the quantity of categories into which the bit positions in the circular buffer are classified; and

if the modulus value that is obtained through calculation is 0, determine that a category identifier corresponding to a bit position whose number is $i$ is a first category; if the modulus value that is obtained through calculation is 1, determine that the category identifier corresponding to the bit position whose number is $i$ is a second category; and if the modulus value that is obtained through calculation is a difference between $\log2(M)/2$ and 1, determine that the category identifier corresponding to the bit position whose number is $i$ is a $[\log2(M)/2]^{th}$ category.

With reference to the second possible implementation manner of the second aspect of the present invention or with reference to the third possible implementation manner of the second aspect of the present invention, in a fourth possible implementation manner, the classification information includes category identifiers corresponding to the bit positions; and

the mapping module is specifically configured to: select, according to the category identifiers corresponding to the bit positions included in the classification information and a quantity of the system bits, bit positions corresponding to a category identifier; map the system bits that are obtained after channel encoding, preferentially to the bit positions, selected from the circular buffer, corresponding to the category identifier; and when a quantity of the selected bit positions corresponding to the category identifier is less than the quantity of the system bits, further select, from the circular buffer, bit positions corresponding to another category identifier, and map the remaining system bits to the further selected bit positions corresponding to the another category identifier, until mapping of the system bits is complete; and

map the parity bits that are obtained after channel encoding to bit positions, corresponding to the another category identifier, remaining in the circular buffer.

With reference to the first possible implementation manner of the second aspect of the present invention, in a fifth possible implementation manner, the classification module is specifically configured to: determine a bit position range, in the circular buffer, corresponding to data of the Pth redundancy version, where the bit position range includes a start bit position and an end bit position, and P is a natural number; and

calculate a difference between the number of the bit position in the circular buffer and a number of the start bit position and calculate a modulus value of the difference and the quantity of classified categories, and determine, according to the modulus value, a category identifier corresponding to each bit position in the bit position range.

With reference to the fifth possible implementation manner of the second aspect of the present invention, in a sixth possible implementation manner, the classification module is specifically configured to: calculate the difference between the number of the bit position in the circular buffer and the number of the start bit position and calculate the modulus value of the difference and the quantity of categories in the following manner:

$$\mod(i - S, \log 2(M)/2),$$

where $i$ represents the number of the bit position with a value ranging from 0 to N-1, where N is a length of the bit positions in the circular buffer; $S$ is the number of the start bit position of the determined bit position range, in the circular buffer, corresponding to the data of the Pth redundancy version; $M$ is the modulation order; and log2($M$)/2 is the quantity of categories into which the bit positions in the circular buffer are classified; and

if the modulus value that is obtained through calculation is 0, determine that a category identifier corresponding to a bit position whose number is $i$ in the bit position range is a first category; if the modulus value that is obtained through calculation is 1, determine that the category identifier corresponding to the bit position whose number is $i$ in the bit position range is a second category; and if the modulus value that is obtained through calculation is a difference between log2($M$)/2 and 1, determine that the category identifier corresponding to the bit position whose number is $i$ in the bit position range is a [log2($M$)/2] [th] category.

With reference to the fifth possible implementation manner of the second aspect of the present invention or with reference to the sixth possible implementation manner of the second aspect of the present invention, in a seventh possible implementation manner, the classification information includes category identifiers corresponding to the bit positions; and

the mapping module is specifically configured to: select, from the bit position range according to the category identifiers corresponding to the bit positions included in the classification information and a quantity of the system bits, bit positions corresponding to a category identifier; map the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further select, from the bit position range, bit positions corresponding to another category identifier, and map the remaining system bits to the further selected bit positions corresponding to the another category identifier, until mapping of the system bits is complete;

determine whether there is a bit position remaining in the bit position range; and

if yes, map the parity bits that are obtained after channel encoding, preferentially to the bit position remaining in the bit position range, and when a quantity of bit positions remaining in the bit position range is less than a quantity of the parity bits, map the remaining parity bits to other bit positions in the circular buffer outside the bit position range; or

if not, map the parity bits that are obtained after channel encoding to other bit positions in the circular buffer outside the bit position range.

With reference to the possible implementation manner of the second aspect of the present invention, or with reference to the first possible implementation manner of the second aspect of the present invention, or with reference to the second possible implementation manner of the second aspect of the present invention, or with reference to the third possible implementation manner of the second aspect of the present invention, or with reference to the fourth possible implementation manner of the second aspect of the present invention, or with reference to the fifth possible implementation manner of the second aspect of the present invention, or with reference to the sixth possible implementation manner of the second aspect of the present invention, or with reference to the seventh possible implementation manner of the second aspect of the present invention, in an eighth possible implementation manner, the device is a terminal device.

According to a third aspect of the present invention, a circular mapping device is provided, including a communications bus, at least one memory and at least one processor, where

the communications bus is configured to transmit information between the memory and the processor;

the at least one memory is configured to store application program code; and

the at least one processor is configured to execute the application program code stored in the at least one memory, and specifically execute:

classifying bit positions in a circular buffer according to a modulation parameter; and

mapping, according to obtained classification information of the bit positions, system bits and parity bits that are obtained after channel encoding to the bit positions in the circular buffer respectively in sequence.

With reference to the possible implementation manner of the third aspect of the present invention, in a first possible implementation manner, the modulation parameter includes a modulation order; and the processor specifically executes:

determining, according to the modulation order, a quantity of categories into which the bit positions in the circular buffer are classified and a category identifier corresponding to each category; and
determining and obtaining, by using a number of a bit position in the circular buffer, a category identifier corresponding to each bit position.

With reference to the first possible implementation manner of the third aspect of the present invention, in a second possible implementation manner, the processor specifically executes:

calculating a modulus value of the number of the bit position in the circular buffer and the quantity of classified categories, and determining, according to the modulus value, the category identifier corresponding to each bit position.

With reference to the second possible implementation manner of the third aspect of the present invention, in a third possible implementation manner, the processor specifically executes:

calculating the modulus value of the number of the bit position in the circular buffer and the quantity of categories in the following manner:

$$\mod(i, \log 2(M)/2),$$

where i represents the number of the bit position with a value ranging from 0 to N-1, where N is a length of the bit positions in the circular buffer; $M$ is the modulation order; and log2($M$)/2 is the quantity of categories into which the bit positions in the circular buffer are classified; and
if the modulus value that is obtained through calculation is 0, determining that a category identifier corresponding to a bit position whose number is $i$ is a first category; if the modulus value that is obtained through calculation is 1, determining that the category identifier corresponding to the bit position whose number is $i$ is a second category; and if the modulus value that is obtained through calculation is a difference between log2($M$)/2 and 1, determining that the category identifier corresponding to the bit position whose number is $i$ is a [log2($M$)/2]th category.

With reference to the second possible implementation manner of the third aspect of the present invention or with reference to the third possible implementation manner of the third aspect of the present invention, in a fourth possible implementation manner, the classification information includes category identifiers corresponding to the bit positions; and
the processor specifically executes:
selecting, according to the category identifiers corresponding to the bit positions included in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the selected bit positions corresponding to the category identifier is less than the quantity of the system bits, further selecting, from the circular buffer, bit positions corresponding to another category identifier, and mapping the remaining system bits to the further selected bit positions corresponding to the another category identifier, until mapping of the system bits is complete; and
mapping the parity bits that are obtained after channel encoding to bit positions, corresponding to the another category identifier, remaining in the circular buffer.

With reference to the first possible implementation manner of the third aspect of the present invention, in fifth second possible implementation manner, the processor specifically executes:

determining a bit position range, in the circular buffer, corresponding to data of the P$^{th}$ redundancy version, where the bit position range includes a start bit position and an end bit position, and P is a natural number; and
calculating a difference between the number of the bit position in the circular buffer and a number of the start bit position and calculating a modulus value of the difference and the quantity of classified categories, and determining, according to the modulus value, a category identifier corresponding to each bit position in the bit position range.

With reference to the fifth possible implementation manner of the third aspect of the present invention, in a sixth possible implementation manner, the processor specifically executes:

calculating the difference between the number of the bit position in the circular buffer and the number of the start bit position and calculating the modulus value of the difference and the quantity of categories in the following manner:

$$\mod(i - S, \log 2(M)/2),$$

where $i$ represents the number of the bit position with a value ranging from 0 to N-1, where N is a length of the bit positions in the circular buffer; $S$ is the number of the start bit position of the determined bit position range, in the circular buffer, corresponding to the data of the $P^{th}$ redundancy version; $M$ is the modulation order; and log2($M$)/2 is the quantity of categories into which the bit positions in the circular buffer are classified; and

if the modulus value that is obtained through calculation is 0, determining that a category identifier corresponding to a bit position whose number is $i$ in the bit position range is a first category; if the modulus value that is obtained through calculation is 1, determining that the category identifier corresponding to the bit position whose number is $i$ in the bit position range is a second category; and if the modulus value that is obtained through calculation is a difference between log2($M$)/2 and 1, determining that the category identifier corresponding to the bit position whose number is $i$ in the bit position range is a [log2($M$)/2]$^{th}$ category.

With reference to the fifth possible implementation manner of the third aspect of the present invention or with reference to the sixth possible implementation manner of the third aspect of the present invention, in a seventh possible implementation manner, the classification information includes category identifiers corresponding to the bit positions; and

the processor specifically executes:

selecting, from the bit position range according to the category identifiers corresponding to the bit positions included in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further selecting, from the bit position range, bit positions corresponding to another category identifier, and mapping the remaining system bits to the further selected bit positions corresponding to the another category identifier, until mapping of the system bits is complete; determining whether there is a bit position remaining in the bit position range; and

if yes, mapping the parity bits that are obtained after channel encoding, preferentially to the bit position remaining in the bit position range, and when a quantity of bit positions remaining in the bit position range is less than a quantity of the parity bits, mapping the remaining parity bits to other bit positions in the circular buffer outside the bit position range; or

if not, mapping the parity bits that are obtained after channel encoding to other bit positions in the circular buffer outside the bit position range.

Beneficial effects of the present invention are as follows:

In the embodiments of the present invention, bit positions in a circular buffer are classified according to a modulation parameter; and system bits and parity bits that are obtained after channel encoding are mapped to the bit positions in the circular buffer in sequence according to obtained classification information of the bit positions. In this way, bit positions in a circular buffer are classified according to different modulation schemes, and system bits and parity bits are mapped to the bit positions in the circular buffer in sequence according to obtained classification information of the bit positions, which avoids that all the system bits are placed in a frontmost part of the circular buffer, and improves a probability that the system bits are allocated to bit positions of high reliability, thereby reducing a bit error rate of a system and improving reliability of the system.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.

FIG. 1 is a schematic flowchart of a circular mapping method according to Embodiment 1 of the present invention;

FIG. 2 is a schematic diagram of mapping system bits and parity bits to bit positions in a circular buffer according to the present invention;

FIG. 3 is a schematic diagram of mapping system bits and parity bits to bit positions in a circular buffer according to the present invention;

FIG. 4 is a schematic flowchart of a circular mapping method according to Embodiment 2 of the present invention;

FIG. 5 is a schematic flowchart of a circular mapping method according to Embodiment 3 of the present invention;

FIG. 6 is a schematic structural diagram of a circular mapping device according to Embodiment 4 of the present invention;

FIG. 7 is a schematic structural diagram of a circular mapping device according to Embodiment 5 of the present invention;

FIG. 8 is a schematic diagram of bit error rates obtained by using circular mapping methods of the prior art and the present invention to map system bits and parity bits; and

FIG. 9 is a schematic diagram of bit error rates obtained by using circular mapping methods of the prior art and the present invention to map system bits and parity bits.

## DESCRIPTION OF EMBODIMENTS

To achieve the objectives of the present invention, the embodiments of the present invention provide a circular mapping method and device. Bit positions in a circular buffer are classified according to a modulation parameter; and system bits and parity bits that are obtained after channel encoding are mapped to the bit positions in the circular buffer in sequence according to obtained classification information of the bit positions. In this way, bit positions in a circular buffer are classified according to different modulation schemes, and system bits and parity bits are mapped to the bit positions in the circular buffer in sequence according to obtained classification information of the bit positions, which avoids that all the system bits are placed in a front-most part of the circular buffer, and improves a probability that the system bits are allocated to bit positions of high reliability, thereby reducing a bit error rate of a system and improving reliability of the system.

The following describes the embodiments of the present invention in detail with reference to the accompanying drawings. Apparently, the described embodiments are merely some but not all of the embodiments of the present invention. All other embodiments obtained by persons of ordinary skill in the art based on the embodiments of the present invention without creative efforts shall fall within the protection scope of the present invention.

### Embodiment 1

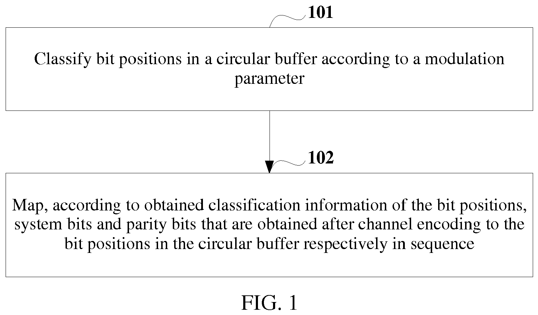

As shown in FIG. 1, FIG. 1 is a schematic flowchart of a circular mapping method according to Embodiment 1 of the present invention. The method may be as follows:

Step 101: Classify bit positions in a circular buffer according to a modulation parameter.

In step 101, the modulation parameter refers to a modulation order used to perform high order Gray mapping that follows rate matching in channel encoding.

Different bit positions in a circular buffer have different transmission performance. Therefore, for different modulation schemes, different modulation parameters may be used to classify the bit positions in the circular buffer.

Specifically, a manner for classifying the bit positions in the circular buffer according to the modulation parameter includes but is not limited to:

Manner 1

Assuming that the modulation parameter is a modulation order, a quantity of categories into which the bit positions in the circular buffer are classified and a category identifier corresponding to each category are determined according to the modulation order.

The quantity of categories into which the bit positions in the circular buffer are classified may be determined in the following manner: the quantity of classified categories is log2($M$)/2, where $M$ is the modulation order.

For example, if the modulation order is 64, log 2(64) / 2 =3. Then, the quantity of categories into which the bit positions in the circular buffer are classified, determined by using a modulation scheme in which the modulation order is 64, is 3. That is, the bit positions in the circular buffer are classified into 3 categories: L1, L2, and L3. A category identifier corresponding to L1 is a first category, a category identifier corresponding to L2 is a second category, and a category identifier corresponding to L3 is a third category.

If the modulation order is 256, log 2(256) / 2 =4. Then, the quantity of categories into which the bit positions in the circular buffer are classified, determined by using a modulation scheme in which the modulation order is 256, is 4. That is, the bit positions in the circular buffer are classified into 4 categories: L1, L2, L3, and L4. A category identifier corresponding to L1 is a first category, a category identifier corresponding to L2 is a second category, a category identifier corresponding to L3 is a third category, and a category identifier corresponding to L4 is a fourth category.

After the quantity of categories into which the bit positions in the circular buffer are classified is determined, a category identifier corresponding to each bit position is obtained through calculation by using a number of the bit position in the circular buffer.

Specifically, a modulus value of the number of the bit position in the circular buffer and the quantity of classified categories is calculated. The category identifier corresponding to each bit position is determined according to the modulus value.

In another embodiment of the present invention, the calculating a modulus value of the number of the bit position in the circular buffer and the quantity of categories includes:

$$\mathrm{mod}(i, \log 2(M) / 2),$$

where $i$ represents the number of the bit position with a value ranging from 0 to N-1, where N is a length of the bit positions in the circular buffer; $M$ is the modulation order; and log2($M$)/2 is the quantity of classified categories.

In another embodiment of the present invention, the determining, according to the modulus value, the category identifier corresponding to each bit position includes:

if the modulus value that is obtained through calculation is 0, determining that a category identifier corresponding to a bit position whose number is $i$ is a first category;

if the modulus value that is obtained through calculation is 1, determining that the category identifier corresponding to the bit position whose number is $i$ is a second category;

...; and

if the modulus value that is obtained through calculation is a difference between $\log2(M)/2$ and 1, determining that the category identifier corresponding to the bit position whose number is $i$ is a $[\log2(M)/2]^{th}$ category.

Assuming that the modulation order is 64, it is determined that the quantity of categories into which the bit positions in the circular buffer are classified is 3. Assuming that numbers of the bit positions in the circular buffer are 0-11, for a bit position whose number is 0, if a modulus value obtained through calculation is 0, a category identifier corresponding to the bit position whose number is 0 is a first category. For a bit position whose number is 1, if a modulus value obtained through calculation is 1, a category identifier corresponding to the bit position whose number is 1 is a second category. For a bit position whose number is 2, if a modulus value obtained through calculation is 2, a category identifier corresponding to the bit position whose number is 2 is a third category. For a bit position whose number is 3, if a modulus value obtained through calculation is 0, a category identifier corresponding to the bit position whose number is 3 is the first category.... For a bit position whose number is 11, if a modulus value obtained through calculation is 2, a category identifier corresponding to the bit position whose number is 11 is the third category.

Assuming that the modulation order is 256, it is determined that the quantity of categories into which the bit positions in the circular buffer are classified is 4. Assuming that numbers of the bit positions in the circular buffer are 0-11, for a bit position whose number is 0, if a modulus value obtained through calculation is 0, a category identifier corresponding to the bit position whose number is 0 is a first category. For a bit position whose number is 1, if a modulus value obtained through calculation is 1, a category identifier corresponding to the bit position whose number is 1 is a second category. For a bit position whose number is 2, if a modulus value obtained through calculation is 2, a category identifier corresponding to the bit position whose number is 2 is a third category. For a bit position whose number is 3, if a modulus value obtained through calculation is 3, a category identifier corresponding to the bit position whose number is 3 is a fourth category. For a bit position whose number is 4, if a modulus value obtained through calculation is 0, a category identifier corresponding to the bit position whose number is 4 is the fourth category.... For a bit position whose number is 11, if a modulus value obtained through calculation is 3, a category identifier corresponding to the bit position whose number is 11 is the fourth category.

In another embodiment of the present invention, the method further includes:

after the category identifier corresponding to each bit position is determined, determining, according to transmission performance of bit positions included in a category identifier, a category level corresponding to the category identifier.

In bit positions included in a category identifier, when a quantity of bits of high transmission reliability is larger, a category level corresponding to the category identifier is higher. In bit positions included in a category identifier, when a quantity of bits of high transmission reliability is smaller, a category level corresponding to the category identifier is lower.

Specifically, statistics are collected separately with respect to bit positions included in each category identifier, to further obtain a quantity of bits of high transmission reliability in the bit positions included in each category identifier.

A category level corresponding to each category identifier is determined according to a value of the obtained quantity. That is, when a quantity corresponding to a category identifier obtained through statistics is larger, a category level corresponding to the category identifier is higher; otherwise, the category level corresponding to the category identifier is lower.

For example, a quantity of bits that correspond to a first category and whose transmission reliability is high is 10, a quantity of bits that correspond to a second category and whose transmission reliability is high is 8, and a quantity of bits that correspond to a third category and whose transmission reliability is high is 6. Then, a category level corresponding to the first category is higher than a category level corresponding to the second category, and the category level corresponding to the second category is higher than a category level corresponding to the third category.

Manner 2

Assuming that the modulation parameter is a modulation order, a quantity of categories into which the bit positions in the circular buffer are classified and a category identifier corresponding to each category are determined according to the modulation order.

The quantity of categories into which the bit positions in the circular buffer are classified may be determined in the following manner: the quantity of categories is $\log2(M)/2$, where $M$ is the modulation order.

In an LTE system, four redundancy versions (RV, Redundancy Version) are specified for HARQ (Hybrid Automatic Repeat request, hybrid automatic repeat request). Therefore, in circular buffer rate matching (CBRM, Circular Buffer Rate Matching), one encoded data block corresponds to four bit positions at which transmission starts. That is, a first RV corresponds to one bit position 1, a second RV corresponds to one bit position 2, a third RV corresponds to one bit position 3, and a fourth RV corresponds to one bit position 4, where the bit position 1, the bit position 2, the bit position 3, and the bit position 4 are different.

After the quantity of categories into which the bit positions in the circular buffer are classified is determined, a manner for obtaining through calculation by using a number of a bit position in the circular buffer, a category identifier corresponding to each bit position may further be the following manner:

Step 1: Determine a bit position range, in the circular buffer, corresponding to data of the P<sup>th</sup> redundancy version.

The bit position range includes a start bit position and an end bit position, and P is a natural number.

It is assumed that a bit position range, in the circular buffer, corresponding to data of the first redundancy version is determined.

Step 2: In the bit position range, calculate a difference between the number of the bit position in the circular buffer and a number of the start bit position and calculate a modulus value of the difference and the quantity of categories, and determine, according to the modulus value, a category identifier corresponding to each bit position in the bit position range.

Specifically, the calculating a difference between the number of the bit position in the circular buffer and a number of the start bit position and calculating a modulus value of the difference and the quantity of classified categories includes:

$$\mathrm{mod}(i - S, \log 2(M)/2),$$

where $i$ represents the number of the bit position with a value ranging from 0 to N-1, where N is a length of the bit positions in the circular buffer; $S$ is the number of the start bit position of the determined bit position range, in the circular buffer, corresponding to the data of the P<sup>th</sup> redundancy version; $M$ is the modulation order; and $\log 2(M)/2$ is the quantity of classified categories.

The determining, according to the modulus value, a category identifier corresponding to each bit position in the bit position range includes:

if the modulus value that is obtained through calculation is 0, determining that a category identifier corresponding to a bit position whose number is $i$ in the bit position range is a first category;
if the modulus value that is obtained through calculation is 1, determining that the category identifier corresponding to the bit position whose number is $i$ in the bit position range is a second category;
...; and
if the modulus value that is obtained through calculation is a difference between $\log 2(M)/2$ and 1, determining that the category identifier corresponding to the bit position whose number is $i$ in the bit position range is a $[\log 2(M)/2]^{th}$ category.

Assuming that the modulation order is 64, it is determined that the quantity of categories of the bit positions in the circular buffer is 3. Assuming that numbers of the bit positions in the circular buffer are 0-11, and a bit position range, in the circular buffer, corresponding to data of the first redundancy version is 5-8, where a number of a start bit position is 5 and a number of an end bit position is 8, the determining a category identifier corresponding to each bit position in the bit position range is as follows:

for a bit position whose number is 5, if a modulus value obtained through calculation is 0, a category identifier corresponding to the bit position whose number is 5 is a first category;
for a bit position whose number is 6, if a modulus value obtained through calculation is 1, a category identifier corresponding to the bit position whose number is 6 is a second category;
for a bit position whose number is 7, if a modulus value obtained through calculation is 2, a category identifier corresponding to the bit position whose number is 7 is a third category; and
for a bit position whose number is 8, if a modulus value obtained through calculation is 0, a category identifier corresponding to the bit position whose number is 8 is the first category.

In another embodiment of the present invention, the method further includes:

after the category identifier corresponding to each bit position is determined, determining, according to transmission performance of bit positions included in a category identifier, a category level corresponding to the category identifier.

In bit positions included in a category identifier, when a quantity of bits of high transmission reliability is larger, a category level corresponding to the category identifier is higher. In bit positions included in a category identifier, when a quantity of bits of high transmission reliability is smaller, a category level corresponding to the category identifier is lower.

Specifically, statistics are collected separately with respect to bit positions included in each category identifier, to further obtain a quantity of bits of high transmission reliability in the bit positions included in each category identifier.

A category level corresponding to each category identifier is determined according to a value of the obtained quantity. That is, when a quantity corresponding to a category identifier obtained through statistics is larger, a category level corresponding to the category identifier is higher; otherwise, the category level corresponding to the category identifier is lower.

For example, a quantity of bits that correspond to a first category and whose transmission reliability is high is 10, a quantity of bits that correspond to a second category and whose transmission reliability is high is 8, and a quantity of bits that correspond to a third category and whose transmission reliability is high is 6. Then, a category level corresponding to the first category is higher than a category level corresponding to the second category, and the category level corresponding to the second category is higher than a category level corresponding to the third category.

Step 102: Map, according to obtained classification information of the bit positions, system bits and parity bits that are obtained after channel encoding to the bit positions in the circular buffer respectively in sequence.

In step 102, a manner for mapping the system bits and the parity bits that are obtained after channel encoding to the bit positions in the circular buffer respectively includes but is not limited to:

Scenario 1

When a manner of the obtained classification information of the bit positions is obtained in Manner 1 of step 101, because, in rate matching, significance of the system bits that are obtained after channel encoding is greater than that of the parity bits, when the system bits and the parity bits are placed, the system bits are placed preferentially, and then the parity bits are placed.

Specifically, when the classification information includes category identifiers corresponding to the bit positions, bit positions corresponding to a category identifier are selected according to the category identifiers corresponding to the bit positions included in the classification information and a quantity of the system bits. The system bits that are obtained after channel encoding are mapped preferentially to the bit positions, selected from the circular buffer, corresponding to the category identifier. When a quantity of the selected bit positions corresponding to the category identifier is less than the quantity of the system bits, bit positions corresponding to another category identifier are further selected from the circular buffer. The remaining system bits are mapped to the further selected bit positions corresponding to the another category identifier, until mapping of the system bits is complete.

The parity bits that are obtained after channel encoding are mapped to bit positions, corresponding to the another category identifier, remaining in the circular buffer.

For example, there are 50 system bits and 100 parity bits, and there are 160 bit positions in the circular buffer. It is assumed that the modulation order is 64. Then, according to the manner of step 101, it is obtained that a quantity of bit positions of a first category is 54, a quantity of bit positions of a second category is 53, and a quantity of bit positions of the second category is 53. It is assumed that the bit positions corresponding to the first category are selected. In this case, the 50 system bits are mapped to the bit positions corresponding to the first category in the circular buffer in sequence. In this case, mapping of the system bits is complete. 4 parity bits of the 100 parity bits are mapped to the remaining bit positions of the bit positions corresponding to the first category in the circular buffer. The remaining 96 parity bits are mapped to other bit positions than the bit positions corresponding to the first category in the circular buffer.

For another example, there are 60 system bits and 90 parity bits, and there are 160 bit positions in the circular buffer. It is assumed that the modulation order is 64. Then, according to the manner of step 101, it is obtained that a quantity of bit positions of a first category is 54, a quantity of bit positions of a second category is 53, and a quantity of bit positions of the second category is 53. It is assumed that the bit positions corresponding to the first category are selected. In this case, 54 system bits are mapped to the bit positions corresponding to the first category in the circular buffer in sequence. In this case, it is determined that a quantity of the selected bit positions corresponding to the first category is less than a quantity of the system bits, and bit positions corresponding to the second category are further selected. The remaining 6 system bits are mapped to the bit positions, selected from the circular buffer, of the second category in sequence, and in this way, mapping of the system bits is complete. The 90 parity bits are first mapped to the remaining 47 bit positions of the bit positions corresponding to the second category, until the 90 parity bits are mapped to bit positions remaining in the circular buffer.

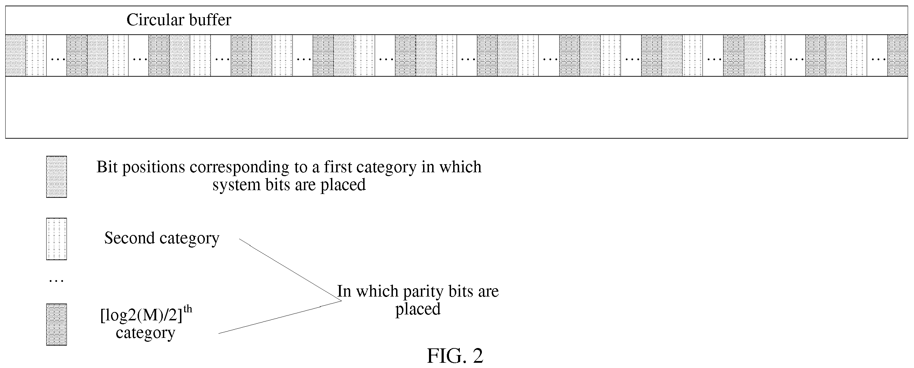

As shown in FIG. 2, FIG. 2 is a schematic diagram of mapping system bits and parity bits to bit positions in a circular buffer according to the present invention.

In addition, assuming that the classification information includes category levels corresponding to the bit positions, a manner for mapping the system bits and the parity bits that are obtained after channel encoding to the bit positions in the circular buffer respectively may further include:

mapping, according to the obtained category levels of the bit positions and a quantity of the system bits, the system bits preferentially to bit positions that belong to a relatively high category level in the circular buffer; when a quantity of the bit positions with the relatively high category level is less than the quantity of the system bits, mapping the system bits to bit positions that belong to a category level second to the relatively high category level in the circular buffer, until mapping of the system bits is complete; and mapping the parity bits to bit positions, of other categories, remaining in the circular buffer.

It should be noted that, when the system bits are mapped to the bit positions in the circular buffer according to the category levels obtained in step 101, the system bits may be mapped to the bit positions in the circular buffer in sequence according to descending order of the levels.

For example, there are 50 system bits and 100 parity bits, and there are 160 bit positions in the circular buffer. It is assumed that the modulation order is 64. Then, according to the manner of step 101, it is obtained that a quantity of bit positions of a first category is 54, a quantity of bit positions of a second category is 53, and a quantity of bit positions of the second category is 53. It is assuming that a category level corresponding to the first category is higher than a category level corresponding to the second category, and that the category level corresponding to the second category is higher than a category level corresponding to the third category. In this case, the 50 system bits are mapped to the bit positions that belong to the first category in the circular buffer in sequence. 4 parity bits of the 100 parity bits are mapped to the remaining bit positions that belong to the first category in the circular buffer. The remaining 96 parity bits are mapped to other bit positions than the bit positions that belong to the first category in the circular buffer.

For another example, there are 60 system bits and 90 parity bits, and there are 160 bit positions in the circular buffer. It is assumed that the modulation order is 64. Then, according to the manner of step 101, it is obtained that a quantity of bit positions of a first category is 54, a quantity of bit positions of a second category is 53, and a quantity of bit positions of the second category is 53. It is assumed that a category level corresponding to the first category is higher than a category level corresponding to the second category, and that the category level corresponding to the second category is higher than a category level corresponding to the third category. In this case, 54 system bits are mapped to the bit positions that belong to the first category in the circular buffer in sequence. The remaining 6 system bits are mapped to the bit positions that belong to the second category in the circular buffer in sequence. The 90 parity bits are first mapped to the remaining 47 bit positions that belong to the second category in the circular buffer. Finally, the remaining 43 parity bits are mapped to the 53 bit positions that belong to the third category in the circular buffer.

Scenario 2

When a manner of the obtained classification information of the bit positions is obtained in Manner 2 of step 101, because, in rate matching, significance of the system bits that are obtained after channel encoding is greater than that of the parity bits, when the system bits and the parity bits are placed, the system bits are placed preferentially, and then the parity bits are placed.

Specifically, bit positions corresponding to a category identifier are selected from the bit position range according to the category identifiers corresponding to the bit positions included in the classification information and a quantity of the system bits. The system bits that are obtained after channel encoding are mapped preferentially to the bit positions, selected from the circular buffer, corresponding to the category identifier. When a quantity of the bit positions, selected from the bit position range, corresponding to the category identifier is less than the quantity of the system bits, bit positions corresponding to another category identifier are further selected from the bit position range. The remaining system bits are mapped to the further selected bit positions corresponding to the another category identifier, until mapping of the system bits is complete. It is determined whether there is a bit position remaining in the bit position range. If yes, the parity bits obtained after channel encoding are mapped preferentially to the bit position remaining in the bit position range, and when a quantity of bit positions remaining in the bit position range is less than a quantity of the parity bits, the remaining parity bits are mapped to other bit positions in the circular buffer outside the bit position range. If not, the parity bits that are obtained after channel encoding are mapped to other bit positions in the circular buffer outside the bit position range.

In addition, assuming that the classification information includes category levels corresponding to the bit positions, a manner for mapping the system bits and the parity bits that are obtained after channel encoding to the bit positions in the circular buffer respectively may further include:

mapping, according to the obtained category levels of the bit positions and a quantity of the system bits, the system bits preferentially to bit positions that belong to a relatively high category level in the bit position range;
when a quantity of the bit positions that belong to the relatively high category level in the bit position range is less than the quantity of the system bits, mapping the remaining system bits to bit positions that belong to a category level second to the relatively high category level in the bit position range, until mapping of the system bits is complete;
determining whether there is a bit position remaining in the bit position range; and
if yes, mapping the parity bits preferentially to the bit position remaining in the bit position range, and when a quantity of bit positions remaining in the bit position range is less than a quantity of the parity bits, mapping the remaining parity bits to other bit positions in the circular buffer outside the bit position range; or

if not, mapping the parity bits to other bit positions in the circular buffer outside the bit position range.

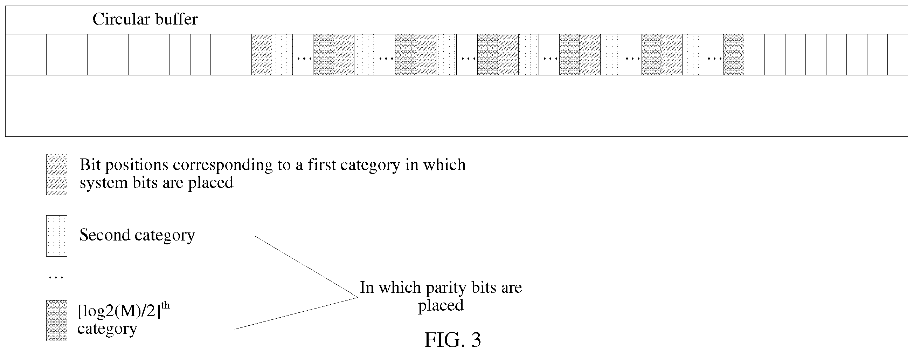

As shown in FIG. 3, FIG. 3 is a schematic diagram of mapping system bits and parity bits to bit positions in a circular buffer according to the present invention.

It should be noted that, when the system bits are mapped to the bit positions in the circular buffer according to the category levels obtained in step 101, the system bits may be mapped to the bit positions in the circular buffer in sequence according to descending order of the levels.

This is the same as the foregoing mapping manner. A difference lies in that start positions are different for mapping of the system bits. For scenario 1, a start position for mapping the system bits is a start bit position corresponding to a category identifier with a highest category level in the circular buffer. For scenario 2, a start position for mapping the system bits is a start bit position corresponding to a category identifier with a highest category level in the bit position range determined in the circular buffer.

It should be noted that the channel encoding involved in the embodiments of the present invention may be convolutional Turbo encoding or may further be another encoding manner, which is not limited herein.

The mapping system bits /or parity bits to the bit positions in the circular buffer involved in the embodiments of the present invention refer to writing the system bits /or the parity bits to the bit positions in the circular buffer.

In the solution of Embodiment 1 of the present invention, bit positions in a circular buffer are classified according to a modulation parameter; and system bits and parity bits that are obtained after channel encoding are mapped to the bit positions in the circular buffer in sequence according to obtained classification information of the bit positions. In this way, bit positions in a circular buffer are classified according to different modulation schemes, and system bits and parity bits are mapped to the bit positions in the circular buffer in sequence according to obtained classification information of the bit positions, which avoids that all the system bits are placed in a front-most part of the circular buffer, and improves a probability that the system bits are allocated to bit positions of high reliability, thereby reducing a bit error rate of a system and improving reliability of the system.

**Embodiment 2**

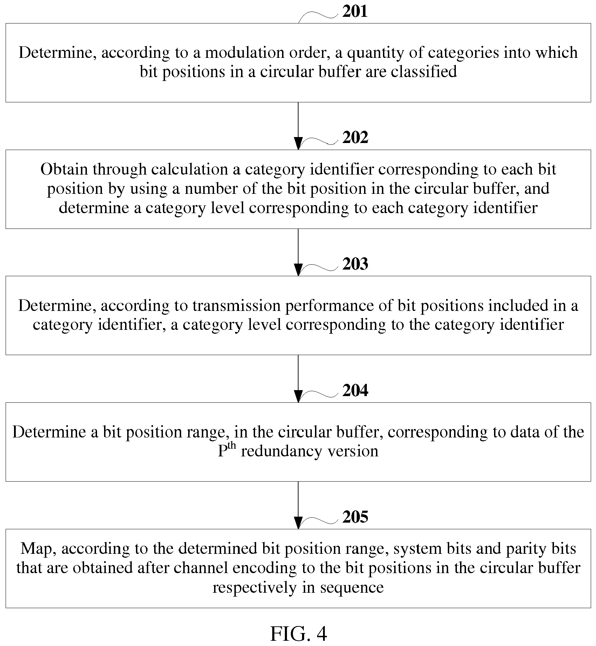

As shown in FIG. 4, FIG. 4 is a schematic flowchart of a circular mapping method according to Embodiment 2 of the present invention. The method may be as follows:

Step 201: Determine, according to a modulation order, a quantity of categories into which bit positions in a circular buffer are classified.

An implementation manner of step 201 is the same as the implementation manner of related content in Manner 1 of step 101 in Embodiment 1 of the present invention, which is not described herein again.

Step 202: Obtain through calculation by using a number of a bit position in the circular buffer, a category identifier corresponding to each bit position, and determine a category level corresponding to each category identifier.

An implementation manner of step 202 is the same as the implementation manner of related content in Manner 1 of step 101 in Embodiment 1 of the present invention, which is not described herein again.

Step 203: Determine, according to transmission performance of bit positions included in a category identifier, a category level corresponding to the category identifier.

In bit positions included in a category identifier, when a quantity of bits of high transmission reliability is larger, a category level corresponding to the category identifier is higher. In bit positions included in a category identifier, when a quantity of bits of high transmission reliability is smaller, a category level corresponding to the category identifier is lower.

In step 203, statistics are collected separately with respect to bit positions included in each category identifier determined in step 202, to further obtain a quantity of bits of high transmission reliability in the bit positions included in each category identifier.

The category level corresponding to each category identifier is determined according to a value of the obtained quantity. That is, when a quantity corresponding to a category identifier obtained through statistics is larger, a category level corresponding to the category identifier is higher; otherwise, the category level corresponding to the category identifier is lower.

Step 204: Determine a bit position range, in the circular buffer, corresponding to data of the $P^{th}$ redundancy version.

The bit position range includes a start bit position and an end bit position, and P is a natural number.

Optionally, a start bit position, in the bit position range, corresponding to a category identifier with a highest category level is determined.

Step 205: Map, according to the determined bit position range, system bits and parity bits that are obtained after channel encoding to the bit positions in the circular buffer respectively in sequence.

In step 205, because, in rate matching, significance of the system bits that are obtained after channel encoding is greater than that of the parity bits, when the system bits and the parity bits are placed, the system bits are placed preferentially, and then the parity bits are placed.

Specifically, starting from the start bit position, in the determined bit position range, corresponding to the category identifier with the highest category level, the system bits are mapped to bit positions that belong to the highest category level in the bit position range. When a quantity of the bit positions that belong to the highest category level is less than a quantity of the system bits, the remaining system bits are mapped to bit positions that belong to a category level second to the highest category level in the circular buffer. The system bits are mapped in sequence according to the category levels, until mapping of the system bits is complete.

For the parity bits, it is determined whether there is a bit position remaining in the bit position range.

If yes, the parity bits are mapped preferentially to the bit position remaining in the bit position range, and when a quantity of bit positions remaining in the bit position range is less than a quantity of the parity bits, the remaining parity bits are mapped to other bit positions in the circular buffer outside the bit position range.

If not, the parity bits are mapped to other bit positions in the circular buffer outside the bit position range.

**Embodiment 3**

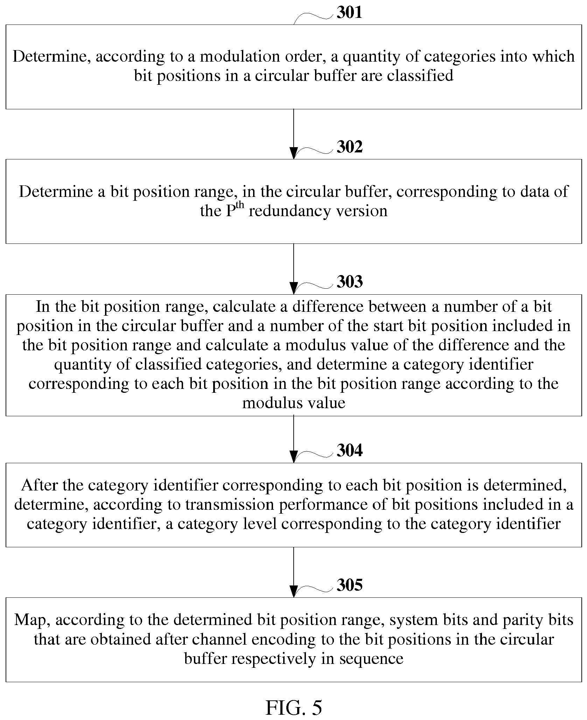

As shown in FIG. 5, FIG. 5 is a schematic flowchart of a circular mapping method according to Embodiment 2 of the present invention. The method may be as follows:

Step 301: Determine, according to a modulation order, a quantity of categories into which bit positions in a circular buffer are classified.

An implementation manner of step 301 is the same as the implementation manner of related content in Manner 2 of step 101 in Embodiment 1 of the present invention, which is not described herein again.

Step 302: Determine a bit position range, in the circular buffer, corresponding to data of the P$^{th}$ redundancy version.

The bit position range includes a start bit position and an end bit position, and P is a natural number.

Step 303: In the bit position range, calculate a difference between a number of a bit position in the circular buffer and a number of the start bit position included in the bit position range and calculate a modulus value of the difference and the quantity of classified categories, and determine, according to the modulus value, a category identifier corresponding to each bit position in the bit position range.

Step 304: After the category identifier corresponding to each bit position is determined, determine, according to transmission performance of bit positions included in a category identifier, a category level corresponding to the category identifier.

In bit positions included in a category identifier, when a quantity of bits of high transmission reliability is larger, a category level corresponding to the category identifier is higher. In bit positions included in a category identifier, when a quantity of bits of high transmission reliability is smaller, a category level corresponding to the category identifier is lower.

Specifically, statistics are collected separately with respect to bit positions included in each category identifier, to further obtain a quantity of bits of high transmission reliability in the bit positions included in each category identifier.

A category level corresponding to each category identifier is determined according to a value of the obtained quantity. That is, when a quantity corresponding to a category identifier obtained through statistics is larger, a category level corresponding to the category identifier is higher; otherwise, the category level corresponding to the category identifier is lower.

Step 305: Map, according to the determined bit position range, system bits and parity bits that are obtained after channel encoding to the bit positions in the circular buffer respectively in sequence.

In step 305, because, in rate matching, significance of the system bits that are obtained after channel encoding is greater than that of the parity bits, when the system bits and the parity bits are placed, the system bits are placed preferentially, and then the parity bits are placed.

Specifically, starting from a start bit position, in the determined bit position range, corresponding to a category identifier with a highest category level, the system bits are mapped to bit positions that belong to the highest category level in the bit position range. When a quantity of the bit positions that belong to the highest category level is less than a quantity of the system bits, the remaining system bits are mapped to bit positions that belong to a category level second to the highest category level in the circular buffer. The system bits are mapped in sequence according to the category levels, until mapping of the system bits is complete.

For the parity bits, it is determined whether there is a bit position remaining in the bit position range.

If yes, the parity bits are mapped preferentially to the bit position remaining in the bit position range, and when a quantity of bit positions remaining in the bit position range is less than a quantity of the parity bits, the remaining parity bits are mapped to other bit positions in the circular buffer outside the bit position range.

If not, the parity bits are mapped to other bit positions in the circular buffer outside the bit position range.

**Embodiment 4**

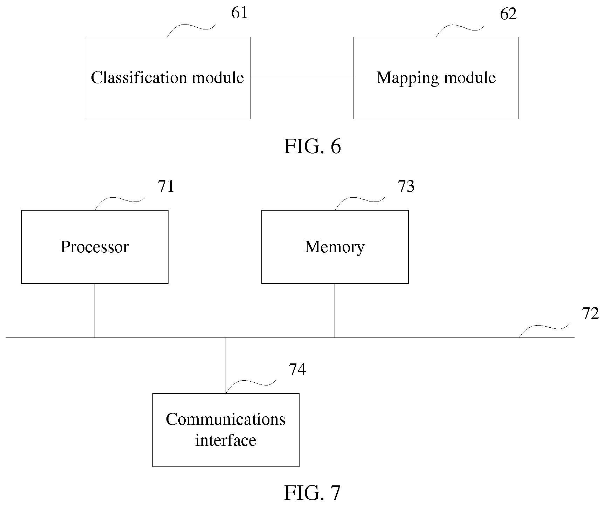

As shown in FIG. 6, FIG. 6 is a schematic structural diagram of a circular mapping device according to Embodiment 4 of the present invention. The device includes a classification module 61 and a mapping module 62, where
the classification module 61 is configured to classify bit positions in a circular buffer according to a modulation parameter; and

the mapping module 62 is configured to map, according to classification information of the bit positions obtained by the classification module 61, system bits and parity bits that are obtained after channel encoding to the bit positions in the circular buffer respectively in sequence.

In another embodiment of the present invention, the modulation parameter includes a modulation order.

The classification module 61 is specifically configured to: determine, according to the modulation order, a quantity of categories into which the bit positions in the circular buffer are classified and a category identifier corresponding to each category; and determine and obtain, by using a number of a bit position in the circular buffer, a category identifier corresponding to each bit position.

The classification module 61 is specifically configured to: calculate a modulus value of the number of the bit position in the circular buffer and the quantity of classified categories, and determine, according to the modulus value, the category identifier corresponding to each bit position.

The classification module 61 is specifically configured to: calculate the modulus value of the number of the bit position in the circular buffer and the quantity of categories in the following manner:

$$\mod(i, \log 2(M)/2),$$

where $i$ represents the number of the bit position with a value ranging from 0 to N-1, where N is a length of the bit positions in the circular buffer; $M$ is the modulation order; and log2($M$)/2 is the quantity of categories into which the bit positions in the circular buffer are classified; and

if the modulus value that is obtained through calculation is 0, determine that a category identifier corresponding to a bit position whose number is $i$ is a first category; if the modulus value that is obtained through calculation is 1, determine that the category identifier corresponding to the bit position whose number is $i$ is a second category; and if the modulus value that is obtained through calculation is a difference between log2($M$)/2 and 1, determine that the category identifier corresponding to the bit position whose number is $i$ is a [log2($M$)/2]th category.

In another embodiment of the present invention, the classification information includes category identifiers corresponding to the bit positions. The mapping module 62 is specifically configured to: select, according to the category identifiers corresponding to the bit positions included in the classification information and a quantity of the system bits, bit positions corresponding to a category identifier; map the system bits that are obtained after channel encoding, preferentially to the bit positions, selected from the circular buffer, corresponding to the category identifier; when a quantity of the selected bit positions corresponding to the category identifier is less than the quantity of the system bits, further select, from the circular buffer, bit positions corresponding to another category identifier, and map the remaining system bits to the further selected bit positions corresponding to the another category identifier, until mapping of the system bits is complete; and map the parity bits that are obtained after channel encoding to bit positions, corresponding to the another category identifier, remaining in the circular buffer.

In another embodiment of the present invention, the classification module 61 is specifically configured to: determine a bit position range, in the circular buffer, corresponding to data of the Pth redundancy version, where the bit position range includes a start bit position and an end bit position, and P is a natural number; and calculate a difference between the number of the bit position in the circular buffer and a number of the start bit position and calculate a modulus value of the difference and the quantity of classified categories, and determine, according to the modulus value, a category identifier corresponding to each bit position in the bit position range.

The classification module 61 is specifically configured to: calculate the difference between the number of the bit position in the circular buffer and the number of the start bit position and calculate the modulus value of the difference and the quantity of categories in the following manner:

$$\mod(i - S, \log 2(M)/2),$$

where $i$ represents the number of the bit position with a value ranging from 0 to N-1, where N is a length of the bit positions in the circular buffer; $S$ is the number of the start bit position of the determined bit position range, in the circular buffer, corresponding to the data of the Pth redundancy version; $M$ is the modulation order; and log2($M$)/2 is the quantity of categories into which the bit positions in the circular buffer are classified; and

if the modulus value that is obtained through calculation is 0, determine that a category identifier corresponding to a bit position whose number is $i$ in the bit position range is a first category; if the modulus value that is obtained through calculation is 1, determine that the category identifier corresponding to the bit position whose number is $i$ in the bit position range is a second category; and if the modulus value that is obtained through calculation is a difference between log2($M$)/2 and 1, determine that the category identifier corresponding to the bit position whose number is $i$ in the bit position range is a [log2($M$)/2]th category.

In another embodiment of the present invention, the classification information includes category identifiers corresponding to the bit positions. The mapping module 62 is specifically configured to: select, from the bit position range according to the category identifiers corresponding to the bit positions included in the classification information and a quantity of the system bits, bit positions corresponding to a category identifier; map the system bits that are obtained after channel encoding, preferentially to the bit positions, selected from the circular buffer, corresponding to the category identifier; when a quantity of the bit positions, selected from the bit position range, corresponding to the category identifier is less than the quantity of the system bits, further select, from the bit position range, bit positions corresponding to another category identifier, and map the remaining system bits to the further selected bit positions corresponding to the another category identifier, until mapping of the system bits is complete; determine whether there is a bit position remaining in the bit position range; and if yes, map the parity bits that are obtained after channel encoding, preferentially to the bit position remaining in the bit position range, and when a quantity of bit positions remaining in the bit position range is less than a quantity of the parity bits, map the remaining parity bits to other bit positions in the circular buffer outside the bit position range; or if not, map the parity bits that are obtained after channel encoding to other bit positions in the circular buffer outside the bit position range.

In another embodiment of the present invention, the device may be a terminal device.

It should be noted that the device of the present invention may be implemented by using hardware or may be implemented by using software, which is not limited herein.

**Embodiment 5**

As shown in FIG. 7, FIG. 7 is a schematic structural diagram of a circular mapping device according to Embodiment 5 of the present invention. The device has functions to execute Embodiment 1 of the present invention to Embodiment 4 of the present invention. The device may be of a general-purpose computer system structure, where the computer system may be specifically a processor-based computer. The device entity includes at least one processor 71, a communications bus 72, a memory 73, and at least one communications interface 74.

The processor 71 may be a general-purpose central processing processor (central processing processor, CPU), a microprocessor, an application-specific integrated circuit (application-specific integrated circuit, ASIC), or one or more integrated circuits configured to control execution of a solution program of the present invention.

The communications bus 72 may include a path for transmission of information between the foregoing components. The communications interface 74 is any transceiver like apparatus configured to communicate with another device or a communications network, such as an Ethernet network, a radio access network (radio access network, RAN), a wireless local area network (Wireless Local Area Networks, WLAN).

The computer system includes one or more memories 73, which may be a read-only memory (read-only memory, ROM) or another type of static memory device that is capable of storing static information and instructions, or a random access memory (random access memory, RAM) or another type of dynamic memory device that is capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc memory, an optical disc memory (including a compact optical disc, a laser disc, an optical disc, a digital versatile optical disc, a Blu-ray optical disc, and the like), a magnetic disk storage medium or another magnetic memory device, or any other medium that can be used to carry or store desired program code in an instruction or data structure form and that can be accessed by a computer, without being limited thereto. These memories are connected to the processor by using the bus.

The memory 73 is configured to store application program code that is used to execute a solution of the present invention. The application program code that is used to execute the solution of the present invention is saved in the memory and is controlled and executed by the processor 71. The processor 71 is configured to execute the application program stored in the memory 73.

In one possible implementation manner, when the foregoing application program is executed by the processor 71, the following functions are implemented:

classifying bit positions in a circular buffer according to a modulation parameter; and
mapping, according to obtained classification information of the bit positions, system bits and parity bits that are obtained after channel encoding to the bit positions in the circular buffer respectively in sequence.

In one possible implementation manner, the modulation parameter includes a modulation order; and the processor 71 specifically executes:

determining, according to the modulation order, a quantity of categories into which the bit positions in the circular buffer are classified and a category identifier corresponding to each category; and
determining and obtaining, by using a number of a bit position in the circular buffer, a category identifier corresponding to each bit position.

In one possible implementation manner, the processor 71 specifically executes:

calculating a modulus value of the number of the bit position in the circular buffer and the quantity of classified categories, and determining, according to the modulus value, the category identifier corresponding to each bit position.

In one possible implementation manner, the processor 71 specifically executes:

calculating the modulus value of the number of the bit position in the circular buffer and the quantity of categories in the following manner:

$$\mod(i, \log 2(M)/2),$$

where $i$ represents the number of the bit position with a value ranging from 0 to N-1, where N is a length of the bit positions in the circular buffer; $M$ is the modulation order; and $\log2(M)/2$ is the quantity of categories into which the bit positions in the circular buffer are classified; and
if the modulus value that is obtained through calculation is 0, determining that a category identifier corresponding to a bit position whose number is $i$ is a first category; if the modulus value that is obtained through calculation is 1, determining that the category identifier corresponding to the bit position whose number is $i$ is a second category; and if the modulus value that is obtained through calculation is a difference between $\log2(M)/2$ and 1, determining that the category identifier corresponding to the bit position whose number is $i$ is a $[\log2(M)/2]^{th}$ category.

In one possible implementation manner, the classification information includes category identifiers corresponding to the bit positions; and
the processor 71 specifically executes:

selecting, according to the category identifiers corresponding to the bit positions included in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the selected bit positions corresponding to the category identifier is less than the quantity of the system bits, further selecting, from the circular buffer, bit positions corresponding to another category identifier, and mapping the remaining system bits to the further selected bit positions corresponding to the another category identifier, until mapping of the system bits is complete; and
mapping the parity bits that are obtained after channel encoding to bit positions, corresponding to the another category identifier, remaining in the circular buffer.

In one possible implementation manner, the processor 71 specifically executes:

determining a bit position range, in the circular buffer, corresponding to data of the $P^{th}$ redundancy version, where the bit position range includes a start bit position and an end bit position, and P is a natural number; and
calculating a difference between the number of the bit position in the circular buffer and a number of the start bit position and calculating a modulus value of the difference and the quantity of classified categories, and determining, according to the modulus value, a category identifier corresponding to each bit position in the bit position range.

In one possible implementation manner, the processor 71 specifically executes:

calculating the difference between the number of the bit position in the circular buffer and the number of the start bit position and calculating the modulus value of the difference and the quantity of categories in the following manner:

$$\mod(i-S, \log 2(M)/2),$$

where $i$ represents the number of the bit position with a value ranging from 0 to N-1, where N is a length of the bit positions in the circular buffer; $S$ is the number of the start bit position of the determined bit position range, in the circular buffer, corresponding to the data of the $P^{th}$ redundancy version; $M$ is the modulation order; and $\log2(M)/2$ is the quantity of categories into which the bit positions in the circular buffer are classified; and
if the modulus value that is obtained through calculation is 0, determining that a category identifier corresponding to a bit position whose number is $i$ in the bit position range is a first category; if the modulus value that is obtained through calculation is 1, determining that the category identifier corresponding to the bit position whose number is $i$ in the bit position range is a second category; and if the modulus value that is obtained through calculation is a difference between $\log2(M)/2$ and 1, determining that the category identifier corresponding to the bit position whose number is $i$ in the bit position range is a $[\log2(M)/2]^{th}$ category.

In one possible implementation manner, the classification information includes category identifiers corresponding to the bit positions; and

the processor 71 specifically executes:

selecting, from the bit position range according to the category identifiers corresponding to the bit positions included in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further selecting, from the bit position range, bit positions corresponding to another category identifier, and mapping the remaining system bits to the further selected bit positions corresponding to the another category identifier, until mapping of the system bits is complete;

determining whether there is a bit position remaining in the bit position range; and

if yes, mapping the parity bits that are obtained after channel encoding, preferentially to the bit position remaining in the bit position range, and when a quantity of bit positions remaining in the bit position range is less than a quantity of the parity bits, mapping the remaining parity bits to other bit positions in the circular buffer outside the bit position range; or

if not, mapping the parity bits that are obtained after channel encoding to other bit positions in the circular buffer outside the bit position range.

In this embodiment, when the application program is executed by the processor, for a method for interaction between the device of the present invention and another network element, reference may be made to the foregoing method embodiments, and details are not described herein again.

The device provided in this embodiment can resolve a problem that a bit error rate of a system rises along with an increase of a modulation order.

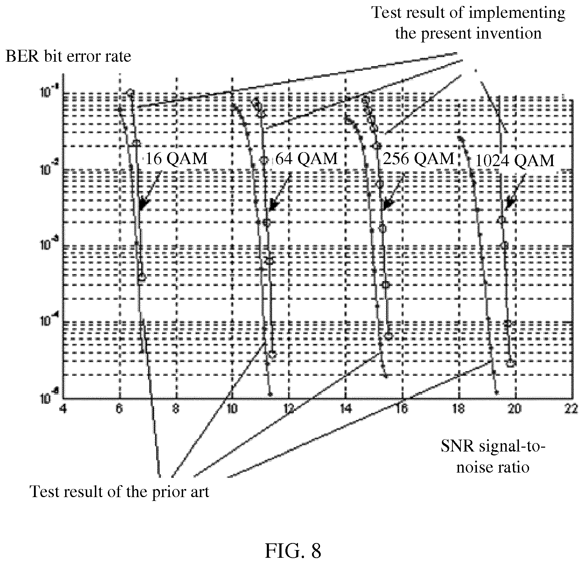

As shown in FIG. 8, FIG. 8 is a schematic diagram of bit error rates obtained by using circular mapping methods of the prior art and the present invention to map system bits and parity bits

It can be seen from FIG. 8 that a bit error rate (that is, bit error rate) of a system decreases when a modulation order increases.

It should be noted that, in the schematic diagram of relationships between an SNR (Signal-to-Noise Ratio, SNR) and a BER (Bit Error rate, bit error rate) shown in FIG. 8, testing is conducted in an AWGN (Additive White Gaussian Noise, additive white Gaussian noise) scenario in which a bit rate is 0.5, a length of bits is 6144, and a maximum quantity of iteration times is 8.

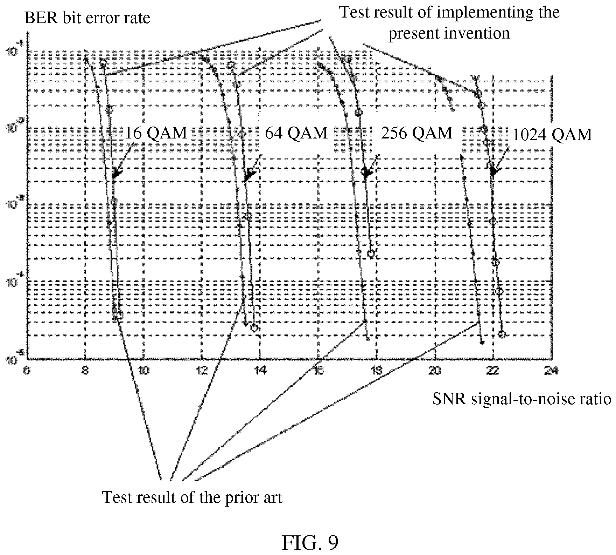

As shown in FIG. 9, FIG. 9 is a schematic diagram of bit error rates obtained by using circular mapping methods of the prior art and the present invention to map system bits and parity bits

It can be seen from FIG. 9 that a bit error rate of a system decreases when a modulation order increases.

It should be noted that, in the schematic diagram of relationships between an SNR (Signal-to-Noise Ratio, SNR) and a BER (Bit Error rate, bit error rate) shown in FIG. 9, testing is conducted in a Rayleigh Fading scenario in which a bit rate is 0.5, a length of bits is 6144, a maximum quantity of iteration times is 8, and an estimated channel state is perfect.

Persons skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. A circular mapping method, comprising:

    classifying bit positions in a circular buffer according to a modulation parameter; and
    mapping, according to obtained classification information of the bit positions, system bits and parity bits that are obtained after channel encoding to the bit positions in the circular buffer respectively in sequence.

2. The method according to claim 1, wherein the modulation parameter comprises a modulation order; and
the classifying bit positions in a circular buffer according to a modulation parameter comprises:

    determining, according to the modulation order, a quantity of categories into which the bit positions in the circular buffer are classified and a category identifier corresponding to each category; and
    determining and obtaining, by using a number of a bit position in the circular buffer, a category identifier corresponding to each bit position.

3. The method according to claim 2, wherein the determining and obtaining, by using a number of a bit position in the circular buffer, a category identifier corresponding to each bit position comprises:

    calculating a modulus value of the number of the bit position in the circular buffer and the quantity of classified categories, and determining, according to the modulus value, the category identifier corresponding to each bit position.

4. The method according to claim 3, wherein the modulus value of the number of the bit position in the circular buffer and the quantity of categories is calculated in the following manner:

$$\mod(i, \log 2(M)/2),$$

wherein $i$ represents the number of the bit position with a value ranging from 0 to N-1, wherein N is a length of the bit positions in the circular buffer; $M$ is the modulation order; and log2($M$)/2 is the quantity of categories into which the bit positions in the circular buffer are classified; and
the determining, according to the modulus value, the category identifier corresponding to each bit position comprises:

    if the modulus value that is obtained through calculation is 0, determining that a category identifier corresponding to a bit position whose number is $i$ is a first category; if the modulus value that is obtained through calculation is 1, determining that the category identifier corresponding to the bit position whose number is $i$ is a second category; and if the modulus value that is obtained through calculation is a difference between log2($M$)/2 and 1, determining that the category identifier corresponding to the bit position whose number is $i$ is a [log2($M$)/2]$^{th}$ category.

5. The method according to claim 3 or 4, wherein the classification information comprises category identifiers corresponding to the bit positions; and
the mapping, according to obtained classification information of the bit positions, system bits and parity bits that are obtained after channel encoding to the bit positions in the circular buffer respectively in sequence comprises:

    selecting, according to the category identifiers corresponding to the bit positions comprised in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the selected bit positions corresponding to the category identifier is less than the quantity of the system bits, further selecting bit positions corresponding to another category identifier from the circular buffer, and mapping the remaining system bits to the further selected bit positions corresponding to the another category identifier, until mapping of the system bits is complete; and
mapping the parity bits that are obtained after channel encoding to bit positions, corresponding to the another category identifier, remaining in the circular buffer.

6. The method according to claim 2, wherein the determining and obtaining, by using a number of a bit position in the circular buffer, a category identifier corresponding to each bit position comprises:

determining a bit position range, in the circular buffer, corresponding to data of the P$^{th}$ redundancy version, wherein the bit position range comprises a start bit position and an end bit position, and P is a natural number; and
calculating a difference between the number of the bit position in the circular buffer and a number of the start bit position and calculating a modulus value of the difference and the quantity of classified categories, and determining, according to the modulus value, a category identifier corresponding to each bit position in the bit position range.

7. The method according to claim 6, wherein the difference between the number of the bit position in the circular buffer and the number of the start bit position, and the modulus value of the difference and the quantity of categories are calculated in the following manner:

$$\mod(i - S, \log 2(M)/2),$$

wherein $i$ represents the number of the bit position with a value ranging from 0 to N-1, wherein N is a length of the bit positions in the circular buffer; $S$ is the number of the start bit position of the determined bit position range, in the circular buffer, corresponding to the data of the P$^{th}$ redundancy version; $M$ is the modulation order; and $\log2(M)/2$ is the quantity of categories into which the bit positions in the circular buffer are classified; and
the determining, according to the modulus value, a category identifier corresponding to each bit position in the bit position range comprises:

if the modulus value that is obtained through calculation is 0, determining that a category identifier corresponding to a bit position whose number is $i$ in the bit position range is a first category; if the modulus value that is obtained through calculation is 1, determining that the category identifier corresponding to the bit position whose number is $i$ in the bit position range is a second category; and if the modulus value that is obtained through calculation is a difference between $\log2(M)/2$ and 1, determining that the category identifier corresponding to the bit position whose number is $i$ in the bit position range is a $[\log2(M)/2]^{th}$ category.

8. The method according to claim 6 or 7, wherein the classification information comprises category identifiers corresponding to the bit positions; and
the mapping, according to obtained classification information of the bit positions, system bits and parity bits that are obtained after channel encoding to the bit positions in the circular buffer respectively in sequence comprises:

selecting, from the bit position range according to the category identifiers corresponding to the bit positions comprised in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further selecting, from the bit position range, bit positions corresponding to another category identifier, and mapping the remaining system bits to the further selected bit positions corresponding to the another category identifier, until mapping of the system bits is complete;
determining whether there is a bit position remaining in the bit position range; and
if yes, mapping the parity bits that are obtained after channel encoding, preferentially to the bit position remaining in the bit position range, and when a quantity of bit positions remaining in the bit position range is less than a quantity of the parity bits, mapping the remaining parity bits to other bit positions in the circular buffer outside the bit position range; or

if not, mapping the parity bits that are obtained after channel encoding to other bit positions in the circular buffer outside the bit position range.

9. A circular mapping device, comprising:

a classification module, configured to classify bit positions in a circular buffer according to a modulation parameter; and
a mapping module, configured to map, according to classification information of the bit positions that is obtained by the classification module, system bits and parity bits that are obtained after channel encoding to the bit positions in the circular buffer respectively in sequence.

10. The device according to claim 9, wherein the modulation parameter comprises a modulation order; and
the classification module is specifically configured to: determine, according to the modulation order, a quantity of categories into which the bit positions in the circular buffer are classified and a category identifier corresponding to each category; and determine and obtain, by using a number of a bit position in the circular buffer, a category identifier corresponding to each bit position.

11. The device according to claim 10, wherein the classification module is specifically configured to: calculate a modulus value of the number of the bit position in the circular buffer and the quantity of classified categories, and determine, according to the modulus value, the category identifier corresponding to each bit position.

12. The device according to claim 11, wherein the classification module is specifically configured to: calculate the modulus value of the number of the bit position in the circular buffer and the quantity of categories in the following manner:

$$\mod(i, \log 2(M)/2),$$

wherein $i$ represents the number of the bit position with a value ranging from 0 to N-1, wherein N is a length of the bit positions in the circular buffer; $M$ is the modulation order; and log2($M$)/2 is the quantity of categories into which the bit positions in the circular buffer are classified; and
if the modulus value that is obtained through calculation is 0, determine that a category identifier corresponding to a bit position whose number is $i$ is a first category; if the modulus value that is obtained through calculation is 1, determine that the category identifier corresponding to the bit position whose number is $i$ is a second category; and if the modulus value that is obtained through calculation is a difference between log2($M$)/2 and 1, determine that the category identifier corresponding to the bit position whose number is $i$ is a [log2($M$)/2]$^{th}$ category.

13. The method according to claim 11 or 12, wherein the classification information comprises category identifiers corresponding to the bit positions; and
the mapping module is specifically configured to: select, according to the category identifiers corresponding to the bit positions comprised in the classification information and a quantity of the system bits, bit positions corresponding to a category identifier; map the system bits that are obtained after channel encoding, preferentially to the bit positions, selected from the circular buffer, corresponding to the category identifier; and when a quantity of the selected bit positions corresponding to the category identifier is less than the quantity of the system bits, further select, from the circular buffer, bit positions corresponding to another category identifier, and map the remaining system bits to the further selected bit positions corresponding to the another category identifier, until mapping of the system bits is complete; and
map the parity bits that are obtained after channel encoding to bit positions, corresponding to the another category identifier, remaining in the circular buffer.

14. The device according to claim 10, wherein the classification module is specifically configured to: determine a bit position range, in the circular buffer, corresponding to data of the P$^{th}$ redundancy version, wherein the bit position range comprises a start bit position and an end bit position, and P is a natural number; and
calculate a difference between the number of the bit position in the circular buffer and a number of the start bit position and calculate a modulus value of the difference and the quantity of classified categories, and determine, according to the modulus value, a category identifier corresponding to each bit position in the bit position range.

15. The device according to claim 14, wherein the classification module is specifically configured to: calculate the difference between the number of the bit position in the circular buffer and the number of the start bit position and calculate the modulus value of the difference and the quantity of categories in the following manner:

$$\mod(i - S, \log 2(M)/2),$$

wherein $i$ represents the number of the bit position with a value ranging from 0 to N-1, wherein N is a length of the bit positions in the circular buffer; $S$ is the number of the start bit position of the determined bit position range, in the circular buffer, corresponding to the data of the P$^{th}$ redundancy version; $M$ is the modulation order; and log2($M$)/2 is the quantity of categories into which the bit positions in the circular buffer are classified; and
if the modulus value that is obtained through calculation is 0, determine that a category identifier corresponding to a bit position whose number is $i$ in the bit position range is a first category; if the modulus value that is obtained through calculation is 1, determine that the category identifier corresponding to the bit position whose number is *i* in the bit position range is a second category; and if the modulus value that is obtained through calculation is a difference between log2(*M*)/2 and 1, determine that the category identifier corresponding to the bit position whose number is *i* in the bit position range is a [log2(*M*)/2]th category.

16. The method according to claim 14 or 15, wherein the classification information comprises category identifiers corresponding to the bit positions; and
the mapping module is specifically configured to: select, from the bit position range according to the category identifiers corresponding to the bit positions comprised in the classification information and a quantity of the system bits, bit positions corresponding to a category identifier; map the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further select, from the bit position range, bit positions corresponding to another category identifier, and map the remaining system bits to the further selected bit positions corresponding to the another category identifier, until mapping of the system bits is complete;
determine whether there is a bit position remaining in the bit position range; and
if yes, map the parity bits that are obtained after channel encoding, preferentially to the bit position remaining in the bit position range, and when a quantity of bit positions remaining in the bit position range is less than a quantity of the parity bits, map the remaining parity bits to other bit positions in the circular buffer outside the bit position range; or
if not, map the parity bits that are obtained after channel encoding to other bit positions in the circular buffer outside the bit position range.

17. The device according to any one of claims 9 to 16, wherein the device is a terminal device.

18. A circular mapping device, comprising a communications bus, at least one memory and at least one processor, wherein
the communications bus is configured to transmit information between the memory and the processor;
the at least one memory is configured to store application program code; and
the at least one processor is configured to execute the application program code stored in the at least one memory, and specifically execute:

classifying bit positions in a circular buffer according to a modulation parameter; and
mapping, according to obtained classification information of the bit positions, system bits and parity bits that are obtained after channel encoding to the bit positions in the circular buffer respectively in sequence.

19. The device according to claim 18, wherein the modulation parameter comprises a modulation order; and
the processor specifically executes:

determining, according to the modulation order, a quantity of categories into which the bit positions in the circular buffer are classified and a category identifier corresponding to each category; and
determining and obtaining, by using a number of a bit position in the circular buffer, a category identifier corresponding to each bit position.

20. The device according to claim 19, wherein the processor specifically executes:

calculating a modulus value of the number of the bit position in the circular buffer and the quantity of classified categories, and determining, according to the modulus value, the category identifier corresponding to each bit position.

21. The device according to claim 20, wherein the processor specifically executes:

calculating the modulus value of the number of the bit position in the circular buffer and the quantity of categories in the following manner:

$$\mathrm{mod}(i, \log 2(M)/2),$$

wherein *i* represents the number of the bit position with a value ranging from 0 to N-1, wherein N is a length of the bit positions in the circular buffer; *M* is the modulation order; and log 2(*M*)/2 is the quantity of categories into which the bit positions in the circular buffer are classified; and if the modulus value that is obtained through calculation is 0, determining that a category identifier corresponding to a bit position whose number is *i* is a first category; if the modulus value that is obtained through calculation is 1, determining that the category identifier corresponding to the bit position whose number is *i* is a second category; and if the modulus value that is obtained through calculation is a difference between log2(*M*)/2 and 1, determining that the category identifier corresponding to the bit position whose number is $i$ is a $[\log 2(M)/2]^{th}$ category.

22. The device according to claim 20 or 21, wherein the classification information comprises category identifiers corresponding to the bit positions; and the processor specifically executes:

selecting, according to the category identifiers corresponding to the bit positions comprised in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the selected bit positions corresponding to the category identifier is less than the quantity of the system bits, further selecting, from the circular buffer, bit positions corresponding to another category identifier, and mapping the remaining system bits to the further selected bit positions corresponding to the another category identifier, until mapping of the system bits is complete; and mapping the parity bits that are obtained after channel encoding to bit positions, corresponding to the another category identifier, remaining in the circular buffer.

23. The device according to claim 19, wherein the processor specifically executes:

determining a bit position range, in the circular buffer, corresponding to data of the $P^{th}$ redundancy version, wherein the bit position range comprises a start bit position and an end bit position, and P is a natural number; and calculating a difference between the number of the bit position in the circular buffer and a number of the start bit position and calculating a modulus value of the difference and the quantity of classified categories, and determining, according to the modulus value, a category identifier corresponding to each bit position in the bit position range.

24. The device according to claim 23, wherein the processor specifically executes:

calculating the difference between the number of the bit position in the circular buffer and the number of the start bit position and calculating the modulus value of the difference and the quantity of categories in the following manner:

$$\mod(i - S, \log 2(M)/2),$$

wherein $i$ represents the number of the bit position with a value ranging from 0 to N-1, wherein N is a length of the bit positions in the circular buffer; $S$ is the number of the start bit position of the determined bit position range, in the circular buffer, corresponding to the data of the $P^{th}$ redundancy version; $M$ is the modulation order; and $\log 2(M)/2$ is the quantity of categories into which the bit positions in the circular buffer are classified; and if the modulus value that is obtained through calculation is 0, determining that a category identifier corresponding to a bit position whose number is $i$ in the bit position range is a first category; if the modulus value that is obtained through calculation is 1, determining that the category identifier corresponding to the bit position whose number is $i$ in the bit position range is a second category; and if the modulus value that is obtained through calculation is a difference between $\log 2(M)/2$ and 1, determining that the category identifier corresponding to the bit position whose number is $i$ in the bit position range is a $[\log 2(M)/2]^{th}$ category.

25. The device according to claim 23 or 24, wherein the classification information comprises category identifiers corresponding to the bit positions; and the processor specifically executes:

selecting, from the bit position range according to the category identifiers corresponding to the bit positions comprised in the classification information and a quantity of the system bits, bit positions corresponding to a category identifier; mapping the system bits that are obtained after channel encoding, preferentially to the bit positions, selected from the circular buffer, corresponding to the category identifier; and when a quantity of the bit positions, selected from the bit position range, corresponding to the category identifier is less than the quantity of the system bits, further selecting, from the bit position range, bit positions corresponding to another category identifier, and mapping the remaining system bits to the further selected bit positions corresponding to the another category identifier, until mapping of the system bits is complete; determining whether there is a bit position remaining in the bit position range; and if yes, mapping the parity bits that are obtained after channel encoding, preferentially to the bit position remaining in the bit position range, and when a quantity of bit positions remaining in the bit position range is less than a quantity of the parity bits, mapping the remaining parity bits to other bit positions in the circular buffer outside the bit position range; or

if not, mapping the parity bits that are obtained after channel encoding to other bit positions in the circular buffer outside the bit position range.

```
                              ⌒‿101
┌─────────────────────────────────────────────────────────┐
│                                                         │
│  Classify bit positions in a circular buffer according  │
│         to a modulation parameter                        │
│                                                         │
└─────────────────────────────────────────────────────────┘
                         │
                         ▼  ⌒‿102
┌─────────────────────────────────────────────────────────┐
│                                                         │
│  Map, according to obtained classification information   │
│  of the bit positions, system bits and parity bits that  │
│  are obtained after channel encoding to the bit          │
│  positions in the circular buffer respectively in       │
│  sequence                                                │
│                                                         │
└─────────────────────────────────────────────────────────┘
```

FIG. 1

Circular buffer

Bit positions corresponding to a first category in which
system bits are placed

Second category

...

$[log2(M)/2]^{th}$
category

In which parity bits are
placed

FIG. 2

**Circular buffer**

Bit positions corresponding to a first category in which system bits are placed

Second category

...

$[\log2(M)/2]^{th}$ category

In which parity bits are placed

FIG. 3

201

Determine, according to a modulation order, a quantity of categories into which bit positions in a circular buffer are classified

202

Obtain through calculation a category identifier corresponding to each bit position by using a number of the bit position in the circular buffer, and determine a category level corresponding to each category identifier

203

Determine, according to transmission performance of bit positions included in a category identifier, a category level corresponding to the category identifier

204

Determine a bit position range, in the circular buffer, corresponding to data of the $P^{th}$ redundancy version

205

Map, according to the determined bit position range, system bits and parity bits that are obtained after channel encoding to the bit positions in the circular buffer respectively in sequence

FIG. 4

301

Determine, according to a modulation order, a quantity of categories into which bit positions in a circular buffer are classified

302

Determine a bit position range, in the circular buffer, corresponding to data of the $P^{th}$ redundancy version

303

In the bit position range, calculate a difference between a number of a bit position in the circular buffer and a number of the start bit position included in the bit position range and calculate a modulus value of the difference and the quantity of classified categories, and determine a category identifier corresponding to each bit position in the bit position range according to the modulus value

304

After the category identifier corresponding to each bit position is determined, determine, according to transmission performance of bit positions included in a category identifier, a category level corresponding to the category identifier

305

Map, according to the determined bit position range, system bits and parity bits that are obtained after channel encoding to the bit positions in the circular buffer respectively in sequence

FIG. 5

| 61 | | 62 |
|---|---|---|
| Classification module | | Mapping module |

FIG. 6

| 71 | | 73 |
|---|---|---|
| Processor | | Memory |

72

| 74 |
|---|
| Communications interface |

FIG. 7

FIG. 8

FIG. 9

# INTERNATIONAL SEARCH REPORT

| International application No. |
| --- |
| **PCT/CN2014/078518** |

### A. CLASSIFICATION OF SUBJECT MATTER

H04L 1/18 (2006.01) i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC, IEEE, GOOGLE: cache, corresponding, verify, loop, circular, buffer, map, modulate, parameter, system, bit, position, class

### C. DOCUMENTS CONSIDERED TO BE RELEVANT

| Category* | Citation of document, with indication, where appropriate, of the relevant passages | Relevant to claim No. |
| --- | --- | --- |
| X | CN 101682486 A (MOTOROLA INC.), 24 March 2010 (24.03.2010), description, page 4, paragraph 2 to page 8, paragraph 1 and page 15, paragraph 3 to page 16, last paragraph, and figures 1-3 and 10 | 1, 2, 9, 10, 17-19 |
| A | CN 101119182 A (ZTE CORP.), 06 February 2008 (06.02.2008), the whole document | 1-25 |
| A | CN 101090305 A (ZTE CORP.), 19 December 2007 (19.12.2007), the whole document | 1-25 |
| A | US 2010166111 A1 (LG ELECTRONICS INC.), 01 July 2010 (01.07.2010), the whole document | 1-25 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 December 2014 (26.12.2014) | **28 January 2015 (28.01.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Junwei** Telephone No.: (86-10) **62413714** |
| --- | --- |

Form PCT/ISA/210 (second sheet) (July 2009)

## INTERNATIONAL SEARCH REPORT
### Information on patent family members

International application No.

**PCT/CN2014/078518**

| Patent Documents referred in the Report | Publication Date | Patent Family | Publication Date |
|---|---|---|---|
| CN 101682486 A | 24 March 2010 | RU 2010101681 A | 27 July 2011 |
| | | KR 20100031575 A | 23 March 2010 |
| | | MY 149949 A | 15 November 2013 |
| | | EP 2171908 A2 | 07 April 2010 |
| | | JP 2010529756 A | 26 August 2010 |
| | | CA 2689587 A1 | 24 December 2008 |
| | | US 2008320353 A1 | 25 December 2008 |
| | | ZA 200908521 A | 25 August 2010 |
| | | JP 2014060814 A | 03 April 2014 |
| | | EP 2485426 A1 | 08 August 2012 |
| | | WO 2008157523 A2 | 24 December 2008 |
| | | RU 2012118754 A | 10 November 2013 |
| | | VN 24338 A | 25 November 2010 |
| | | MX 2009013877 A1 | 28 February 2010 |
| | | IN 200907125 P4 | 12 March 2010 |
| CN 101119182 A | 06 February 2008 | None | |
| CN 101090305 A | 19 December 2007 | None | |
| US 2010166111 A1 | 01 July 2010 | EP 2374235 A2 | 12 October 2011 |
| | | WO 2010071334 A2 | 24 June 2010 |
| | | KR 20110095940 A | 25 August 2011 |

Form PCT/ISA/210 (patent family annex) (July 2009)